# EUROPEAN PATENT SPECIFICATION

(11) **EP 1 486 406 B1**
(45) Date of publication and mention of the grant of the patent: **12.09.2007**
(21) Application number: 03425366.6
(22) Date of filing: 10.06.2003
(51) Int. Cl.: B62J 11/00

(54) **Support element for bicycle accessories**
Halterung für Fahrradutensilien
Elément de support pour des accessoires de vélo

(43) Date of publication of application: 15.12.2004
(73) Proprietor: CAMPAGNOLO S.R.L., I-36100 Vicenza (IT)
(72) Inventor: Meggiolan, Mario, 36051 Creazzo (VI) (IT)
(74) Representative: Checcacci, Giorgio

(56) References cited:
- EP-A- 1 312 540
- DE-A- 2 147 927
- DE-A- 10 227 612
- DE-U- 20 103 916
- US-A- 4 437 596
- US-A- 4 830 240
- US-A- 6 059 245
- US-A1- 2001 042 767

## Description

The present invention concerns a support element for bicycle accessories, in particular a bottle holder, suitable for being associated with the bicycle frame and for easing the transportation of the accessories during riding.

The invention also concerns the method for making such an element.

In the following description, for the sake of brevity, we shall mainly use the term bottle holder but, with such a term, we mean to indicate more generally a generic support element for accessories such as glasses, rolled-up waterproofs and the like.

In the field of bicycles different types of bottle holder are known suitable for satisfying the different requirements of the cyclist, both a professional and an amateur.

For such a purpose, it is a constant objective of manufacturers to produce bottle holders which allow appearance to be married with the characteristics of strength and reliability of the product together with the weight reduction and the containment of production costs.

Known bottle holders essentially consist of a part for holding the bottle and a part for the attachment and fixation to the bicycle frame.

Generally, in such bottle holders, the two parts consist of a single body. Bottle holders, in which both the holding part and the fixing part consist of a single shaped rigid metal wire which defines the entire framework where the bottle is received, are widely available.

The trend towards making light bottle holders has led to a development of new solutions which use lighter and at the same time stronger materials.

Examples of such solutions are described in patents EP 1 208 031 B1 to Elite and EP 1 312 540 A2 to the Applicant. Also in such solutions both the fixing part and the holding part constitute a single body made of carbon fibre.

The use of carbon fibre allows on the one hand the overall weight of the bottle holder to be reduced, and at the same time allows it to have particular characteristics of mechanical strength.

In the solution described in EP 1 208 031 B1 the holding part consists of two arms which embrace the bottle longitudinally from the top downwards. They converge at the bottom at a zone in which they are connected together to form a transversal appendage which acts as a support for the bottom of the bottle.

In the solution described in EP 1 312 540 A2 the holding part consists of a substantially annular element which defines an opening suitable for insertably receiving the bottle and embracing it transversally with respect to its own axis.

The described bottle holders, however, have the drawback of the high production cost, both in terms of long processing times and in terms of waste of very expensive material. Such bottle holders are, indeed, made with sheets of carbon fibre fabric which must first of all be cut into the desired shape, which in general is very complex. This means long processing times for the cutting and at the same time the formation of cut-offs of carbon fibre fabric which can no longer be used, with the consequent loss of such material. Moreover, in a subsequent processing step it is necessary to arrange the sheets of carbon fibre fabric of the desired shape in the mould one at a time and this also involves long processing times.

Finally, the shaping in a single body involves the use of complicated shaped moulds, with consequent problems in terms of production costs thereof.

The last but not least drawback of such bottle holders is the fact that the breaking of a part thereof means their complete replacement, with the consequent cost burden for the cyclist.

US 6,059,245 discloses a support element for a bicycle accessory (namely a bottle holder) comprising a fixing part for the attachment to a bicycle frame and a holding part defining a seat for receiving the bottle; the holding part is at least partially integral with the fixing part and includes a hook arrangement for clamping the holding part around the bottle.

US 4,830,240 discloses a support element for a bicycle accessory (namely a bottle holder) comprising a fixing part for the attachment to a bicycle frame and a holding part defining a seat for receiving the bottle; the fixing and the holding parts are distinct from each other and connected through joining means. Thus, US 4,830,240 discloses a support element for bicycle accessories according to the preamble of claim 1. Both the fixing and the holding parts are manufactured by injection molding of a polymeric material reinforced by fibres of carbon, graphite, aromatic polyimide or glass; the injection molding technique implies that fibres used to reinforce the material can only be very short fibre.

A purpose of the present invention is that of overcoming the above mentioned drawbacks.

A first purpose of the invention is that of making a bottle holder which allows the processes to be simplified and the processing times necessary to obtain it to be reduced, with the consequent reduction in production costs with respect to known bottle holders.

Another purpose of the invention is to make a bottle holder which allows the material waste to be limited and therefore the use of raw materials to make it to be optimised.

Such purposes are accomplished by a support element for bicycle accessories according to claim 1; preferred embodiments are addressed by claims 2 to 28.

Advantageously, the two parts which constitute the support element of the invention are made separately in order to be then assembled at the time of assembly, allowing a reduction in production time.

In particular, the reduction in production time and costs is obtained through a method according to claim 30; preferred embodiments are addressed by claims 31 to 39.

Such a cutting operation is repeated in series along the tubular element obtaining a plurality of parts of the support element in a single step.

According to a preferred embodiment of the invention, the holding part is annular shaped whereas an elastically yielding zone allows the oscillation of the holding part with respect to the fixing part from a first to a second position. Such a second position is taken up by the annular part when the accessory is inserted in the seat and allows it to be locked.

The joining means preferably consist of screw means, whereas the fixing part presents, at the bottom, a support portion for the bottom of the accessory and, at the top, an elastically deformable fin which sealably rests upon the accessory when it is inserted in the seat.

Preferably, the annular holding part consists of a structural composite material whereas the fixing part consists of a reinforced plastic material.

By structural composite material we mean in general a material consisting of a matrix of polymeric material in which long structural fibres are incorporated, i.e. of a length greater than a millimeter, to give the composite high mechanical properties. The matrix of polymeric material of the composite can consist of a thermosetting plastic material or a thermoplastic material, with different known manufacturing processes according to the chosen material.

By reinforced plastic material we mean a material consisting of a polymeric material to which non-structural reinforcement elements, usually powders, granules or short fibres, i.e. of a size smaller than five millimetres, are added.

In accordance with a preferred embodiment, the method for making the parts of the support element foresees the formation of the tubular element through its shaping in a mould. In such a case, a predetermined number of layers of structural fibres incorporated in a matrix of polymeric material is arranged in a tubular configuration in the mould and kept in adherence, during reticulation, through the pressure applied by an inflated bag arranged inside of it.

Further characteristics and advantages of the invention shall become clearer from the following description with reference to the attached drawings, provided purely as a non-limiting example, in which:
- fig. 1 represents an isometric view of the bottle holder of the invention applied to a bicycle frame;
- fig. 2 represents an exploded isometric view of the bottle holder of the invention of fig.1;
- fig. 3 represents the bottle holder of the invention with the bottle inserted;
- fig. 4 represents an exploded view of a variant embodiment of the bottle holder of the invention;
- figures 5 and 6 represent some production steps of the parts of the bottle holder according to a first embodiment of the method of the invention;
- figures 7 and 8 represent a variant embodiment of the method illustrated in figs. 5 and 6;
- fig. 9 represents the semi-worked product relative to the holding part of the bottle holder of the invention obtained according to the steps represented in figs. 5 and 6 or else in figs. 7 and 8;
- fig. 10 represents a variant of the semi-worked product of fig. 9;
- fig. 11 represents the semi-worked product relative to the fixing part of the bottle holder of the invention obtained according to the steps represented in figs. 5 and 6 or else in figs. 7 and 8.

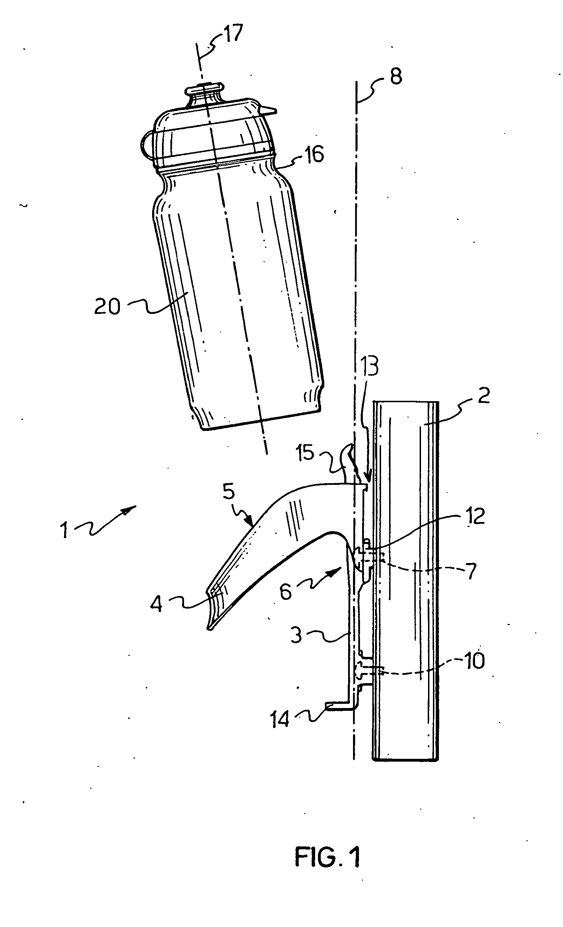

The bottle holder of the invention is represented in figures 1 to 3 where it is wholly indicated with 1.

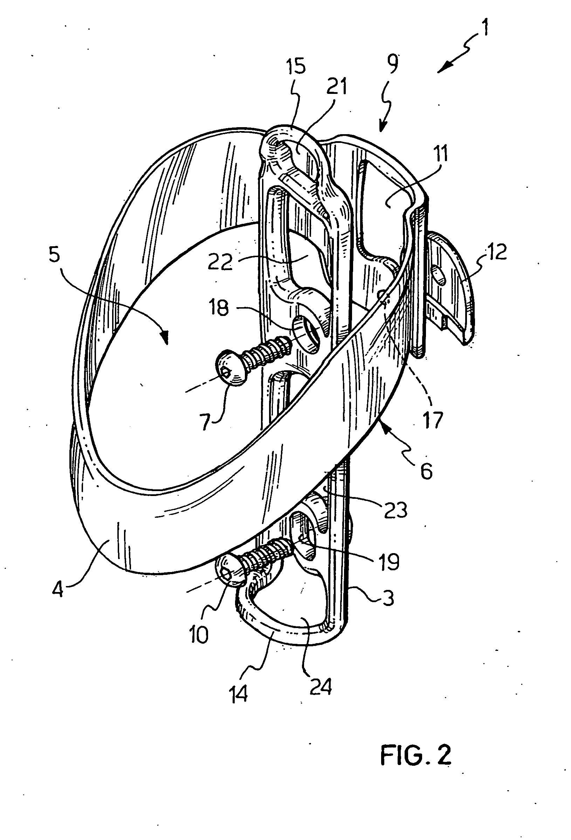

In fig. 1 the bottle holder 1 is represented mounted to the frame 2 of a bicycle. As it can be seen more clearly in fig. 2, it essentially consists of a fixing part 3 for the attachment to the frame 2 of the bicycle and a holding part 4 associated with the fixing part 3. The holding part 4 defines a seat 5 with a substantially circular section, matching the body of a bottle 20. Such a section can be chosen according to different configurations should it be foreseen that the accessory to be inserted assumes a different shape.

According to the invention, the fixing part 3 and the holding part 4 are connected together through joining means, wholly indicated with 6, and consisting of a screw 7 arranged passing through holes 17, 18 formed, respectively, in the holding part 4 and in the fixing part 3. In different embodiments, instead of the screw 7 equivalent known connection means can be used, like for example rivets or else a gluing substance.

The holding part 4 is preferably made with a structural composite material and in particular with long structural carbon fibres incorporated in a matrix of thermosetting plastic material, such a composite material being commonly known as "carbon fibre". The fixing part 3 is made with a plastic material and in particular with a thermoplastic material reinforced with granules of glass. The use of such materials allows particular characteristics of structural strength to be given to the holding part 4 and to the fixing part 3 and at the same time allows the weight for the support element 1 to be kept very low. It should be meant, however, that in other embodiments different combinations of materials can be foreseen for the parts 3 and 4. For example, both parts 3, 4 can be made of structural composite material, or else both can be made of reinforced or non-reinforced plastic material or else the holding part 4 can be made of plastic material and the fixing part 3 can be made of composite material.

Furthermore, the long structural fibres of the composite material can alternatively be chosen among glass fibres, aramidic fibres, ceramic fibres or any combination thereof. In the same way, the non-structural elements of the reinforced plastic material can be chosen among short carbon fibres, short glass fibres, minerals or any combination thereof.

The aforementioned materials for making the parts which make up the support element of the invention advantageously have specific weights of less than 2.5 kg/dm³.

As far as the holding part 4 is concerned, it is substantially annular shaped and extends transversally with respect to the axis 8 of extension of the fixing part 3. In particular, the fixing part 3 is made integral with the frame 2 through screw attachment means consisting of a first screw 7 arranged passing through the aforementioned holes 17, 18 formed respectively in the holding part 4 and in the fixing part 3, and a second screw 10 arranged passing through a hole 19 formed in the fixing part 3. Such screws 7, 10 engaging in corresponding threaded holes present in the frame 2, not shown in the figures, allow the attachment in two points of the support element 1 to the bicycle. It should be noted that the screw 7 carries out the dual function of joining the holding part 4 to the fixing part 3 and of attaching the support element 1 to the frame 2. It is clear that the screw attachment means could, in different solutions, be replaced by different but equivalent means, like for example a clamp.

The support element of the invention 1 presents an elastically yielding zone, wholly indicated with 9, which allows the oscillation of the annular part 4 with respect to the holding part 3, from a first rest position to a second holding position, as shall be illustrated more clearly hereafter.

The elastically yielding zone 9 is made in the holding part 4 near to the joining zone to the fixing part 3 and is obtained through the reduction of the material which constitutes its structure. For such a purpose, the body of the annular element 4 has a through opening 11, the size of which is suitably chosen in the design phase to allow the aforementioned oscillations of the holding part 4 and, at the same time, to ensure the characteristics of strength and duration of the component 1.

In different variant embodiments, the desired elasticity can be obtained in a different way, for example by making such a zone with a material with resilient characteristics or else through a reduction in thickness of the material with respect to the body of the holding part 4.

In other cases, the elastically yielding zone 9, can be formed in the fixing part 3 instead of in the holding part 4.

There is also a spacer element 12, also made of plastic material, placed between the holding part 4 and the frame 2, which allows the correct assembly of the support element 1 to the frame 2. The spacer element 12, indeed, allows a free zone 13 to be created, as it can be seen in fig. 1, which allows the oscillation of the holding part 4 without interference with the frame 2.

As far as the fixing part 3 is concerned, it presents a substantially longitudinal extension along the axis 8 and has, at the bottom, a support portion 14, in the form of an appendage, which extends perpendicular to the axis 8. The support portion 14 acts as a support for the bottle 20 when it is inserted in the seat 5. The fixing part 3 also presents, at the top, an elastically deformable holding fin 15 which extends towards the seat 5 for receiving the bottle 20.

Along the body of the fixing part 3 through openings 21, 22, 23, 24 are also formed which allow the weight of the fixing part 3 and therefore of the support element 1 to be reduced. The through opening 21 formed at the top near to the holding fin 15 also allows the desired elasticity to be given to the fin 15 itself. It is clear that in different embodiments the number and shape of such openings can be whatever. Or else it is possible that, to give the fixing part a full structure, such openings are not present.

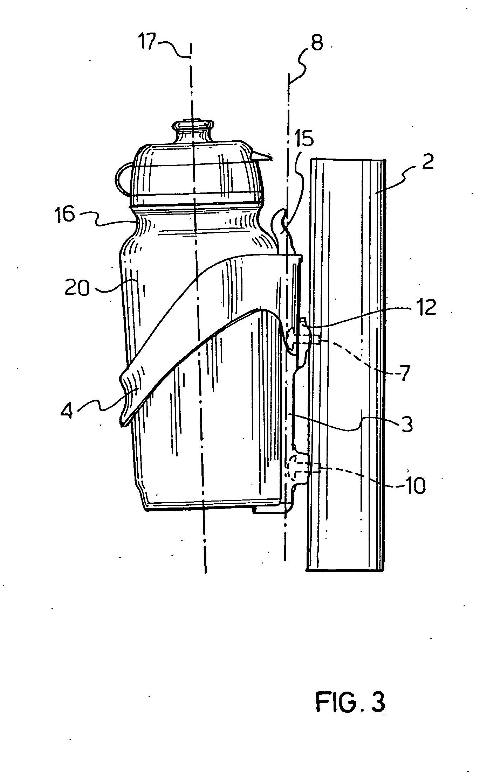

From the operative point of view, with reference to figures 1 and 3, when the bottle 20 is not inserted inside the support element 1, the seat 5 presents its axis 17 inclined with respect to the axis 8 of the fixing part 3, defining a first rest position for the annular holding part 4.

The positioning of the bottle 20 in the support element 1 takes place substantially through its insertion in the seat 5 along the direction defined by the axis 17. During such an insertion, the walls of the bottle 20 come into contact with the inner wall of the annular holding part 4, whereas the bottom of the bottle 20 slides along the fixing part 3 until is abuts against the support portion 14. At the same time, the annular part 4 oscillates around the elastically yielding zone 9 moving from the first rest position, shown in fig. 1, to a second end position, as represented in fig. 3. In the end position the axis 17 of the seat 5 is substantially parallel to the axis 8 of the fixing part 3. The bottle 20 is kept in inserted position thanks to the elastic pulling force of the annular part 4 applied by the elastically yielding zone 9. The deformable fin 15 also improves the holding in position of the bottle 20, abutting against its outer surface and in particular against the annular recess 16.

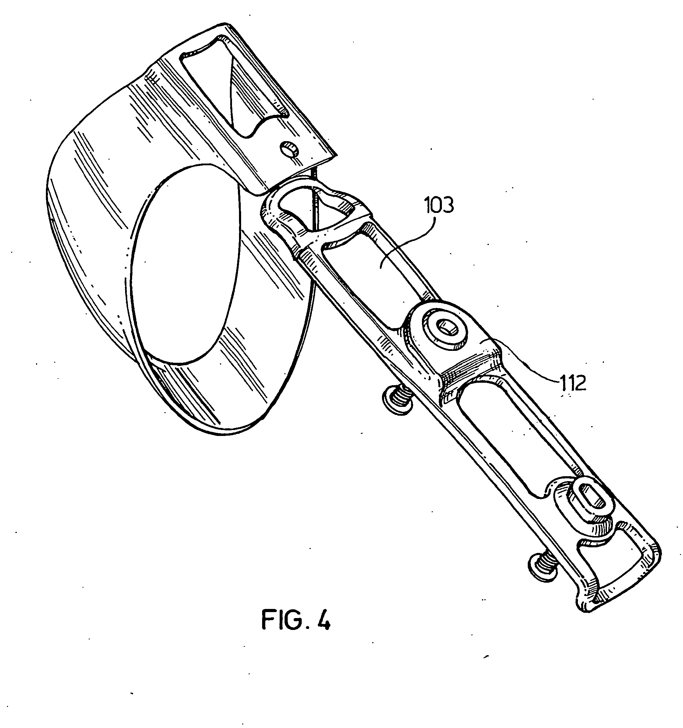

In fig. 4 a variant embodiment of the invention is represented which differs from the previous one in that the spacer element 112 constitutes a single body with the fixing part 103 and is advantageously obtained through a single shaping step by moulding of a plastic material.

From what has been stated up to now, it is clear that the holding part which constitutes the support element of the invention constitutes a separate piece up until assembly, and this allows the fine tuning of a method for making them which leads to benefits in terms of production time and costs.

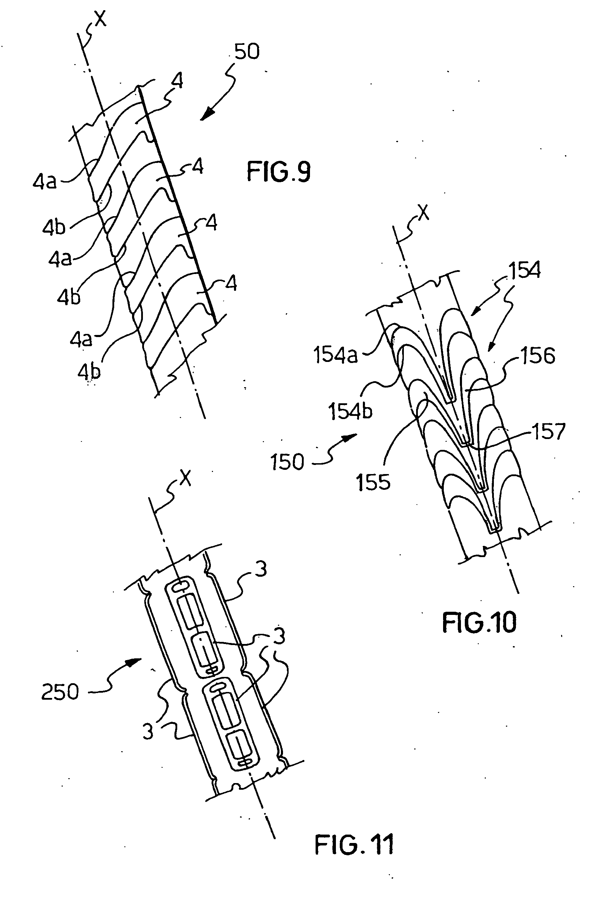

The method foresees the realization of a tubular element 50, as it can be seen in fig. 9, with substantially longitudinal extension along a main direction X, in which the outer surface presents a shape which follows the profile of the holding part 4. Such a shape is successively repeated for the whole length of the tubular element 50 to define a plurality of holding parts 4 in which respective boundary lines 4a, 4b are defined which define the side edges thereof. The shaped outer surface of the tubular element 50 is subjected to a cutting step along the lines 4a, 4b to obtain a plurality of holding parts 4. At the same time, or even afterwards, the through hole 11 and the hole 17 are made on the body of each holding part 4.

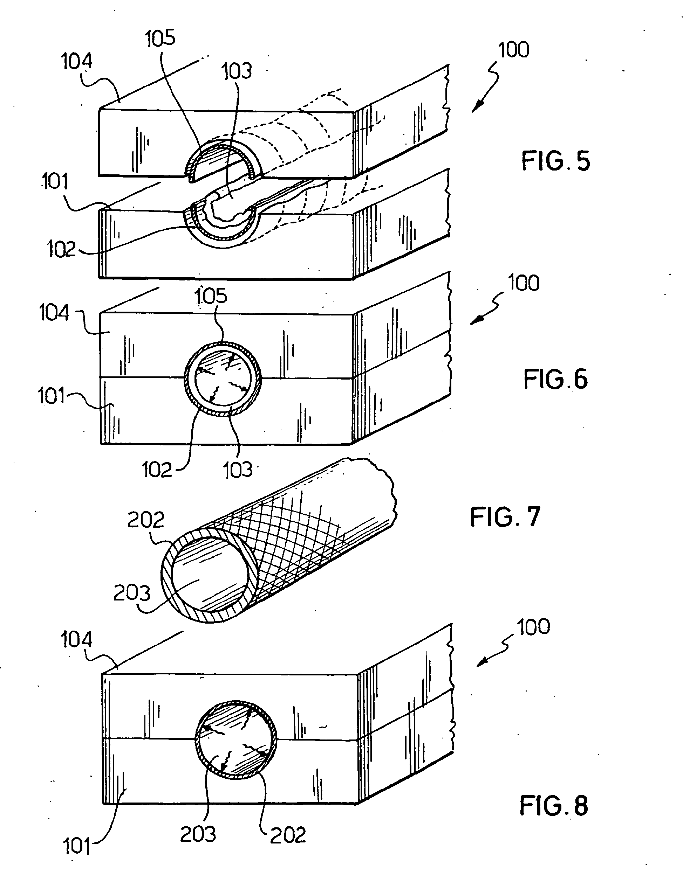

In a preferred embodiment, the holding part 4, as stated, is made of structural composite material for which reason the tubular element 50 must also be made with the same material. A first embodiment of the tubular element 50 is shown in figures 5 and 6, in which it is obtained by shaping in a mould. The first step foresees the application of a predetermined number of layers 102 of structural fibres incorporated in a matrix of polymeric material, on the inner surface of a first part 101 of a mould 100. An inflatable bag 103 is arranged on such layers 102 whereas a second number of layers 105 of structural fibres incorporated in a matrix of plastic material is applied on the inner surface of the second half 104 of the mould 100. The two parts 101, 104 of the mould 100 are then brought closet together and the bag 103 is inflated to make the layers 102, 105 adhere to the inner surfaces of the two parts 101, 104 of the mould 100, as it can be seen in fig. 6. The temperature of the mould is then raised, through known heating means, up to a value which allows the reticulation of the polymeric material of the matrix which constitutes the layers 102, 105. Finally, the two parts 101, 104 of the mould 100 are moved apart to remove the tubular element 50, ready to be subjected to the subsequent cutting operations, as described previously.

A second embodiment of the tubular element 50 is shown in figures 7 and 8. The first step foresees the application of a predetermined number of layers 202 of structural fibres incorporated in a matrix of polymeric material, on the outer surface of a thermo-expandable core 203. The core 203, surrounded by the layers 202, is arranged inside the recess defined by the two halves 101, 104 of the mould 100. The mould 100 is closed and the temperature of the mould is then raised up to a value which allows the reticulation of the polymeric material of the matrix which constitutes the layers 202. At the same time, the core 203, expanding, keeps the layers 202 in adherence against the inner surfaces of the two parts 101, 104 of the mould 100.

Finally, the two parts 101, 104 of the mould 100 are moved apart to remove the tubular element 50, ready to be subjected to the described cutting operations. The core 203 is then removed from the tubular element 50, before or equally after the cutting operations.

As far as the cutting operations are concerned, they can advantageously be made by a high-pressure concentrated water jet incorporating abrasive particles, which is aimed along the curves defined by the boundary lines 4a, 4b of the tubular element 50.

In fig. 10 a tubular element 150 is shown, obtained for example according to one of the two techniques illustrated in figures 4 to 8, which is used to make a plurality of holding elements, in which the boundary lines 154a, 154b have a different progression to the previous one. With such a configuration a holding element 154 is obtained in which two elongated arms 155, 156 are defined which embrace the bottle 20, when inserted, longitudinally substantially for the whole of its length and support it through the lower appendage 157.

In fig. 11 a tubular element 250 is shown, obtained for example according to one of the two techniques illustrated in figures 4 to 8, which is used to make a plurality of fixing elements 3.

Finally, the tubular elements 50, 150 or 250 can be made by injection moulding of structural composite materials, a technique which foresees the insertion in the mould, at random or in a determined order, of small sheets of structural fibres or of three-dimensional compositions of structural fibres.

## Claims

1. Support element (1) for bicycle accessories (20) comprising a fixing part (3) for the attachment to the frame (2) of the bicycle and at least one holding part (4; 154) defining a seat (5) suitable for receiving said accessory (20), wherein said fixing (3) and holding (4; 154) parts are distinct from each other and connected through joining means (6), **characterised in that** at least one of said parts (3, 4; 154) comprises structural fibres of a length greater than a millimeter incorporated in a matrix of a polymeric material to form a structural composite material, and at least one of said parts (3, 4; 154) comprises non-structural reinforcement elements incorporated in said polymeric material to form a reinforced plastic material.

2. Element (1) according to claim 1, **characterised in that** said structural fibres are chosen among the group comprising carbon fibres, glass fibres, aramidic fibres, ceramic fibres or any combination thereof.

3. Element (1) according to claim 1, **characterised in that** said non-structural reinforcement elements are chosen among carbon fibres, glass fibres, glass balls, minerals or any combination thereof.

4. Element (1) according to claim 1, **characterised in that** the polymeric material of at least one of said parts (3, 4; 154) is a thermosetting plastic material.

5. Element (1) according to claim 1, **characterised in that** the polymeric material of at least one of said parts (3, 4; 154) is a thermoplastic material.

6. Element (1) according to claim 1, **characterised in that** said holding part (4; 154) is made with said structural composite material and said fixing part (3) is made with said reinforced plastic material.

7. Element (1) according to claim 1, **characterised in that** said holding part (4) is substantially annular shaped to transversally embrace said accessory (20).

8. Element according to claim 1, **characterised in that** said holding part (154) presents a substantially longitudinal extension along a main direction of insertion of said accessory (20).

9. Element (1) according to claim 7, **characterised in that** it comprises an elastically yielding zone (9) suitable for allowing the oscillation of said annular holding part (4) with respect to said fixing part (3) from a first to a second position, by means of the introduction of said accessory (20) in said seat (5), so that in said second position said annular holding part (4) keeps the accessory (20) locked in said seat (5).

10. Element (1) according to claims 9, **characterised in that** said elastically yielding zone (9) is near to said joining means (6).

11. Element (1) according to claim 10, **characterised in that** said elastically yielding zone is made in said holding part.

12. Element (1) according to claim 10, **characterised in that** said elastically yielding zone (9) is made in said fixing part (3).

13. Element (1) according to claims 10, **characterised in that** said holding part (4) and/or said fixing part (3) presents a through opening (11) which makes said elastically yielding zone (9).

14. Element (1) according to claim 10, **characterised in that** said elastically yielding zone (9) is made through the use of a material with resilient characteristics.

15. Element (1) according to claim 1, **characterised in that** it comprises a spacer element (12) placed between said holding part (4) and said frame (2).

16. Element (1) according to claim 15, **characterised in that** said spacer element (12) is made in a single body with said fixing part (3).

17. Element (1) according to claim 1, **characterised in that** said joining means (6) comprise screw means (7).

18. Element (1) according to claim 1, **characterised in that** said joining means (6) comprise rivets.

19. Element (1) according to claim 1, **characterised in that** said joining means (6) comprise a gluing substance.

20. Element (1) according to claim 1, **characterised in that** said fixing part (3) presents, at the bottom, an inwardly recessed portion (14), for supporting the bottom of said accessory (20), when inserted in said element (1).

21. Element (1) according to claim 1, **characterised in that** said fixing part (3) presents, at the top, an elastically deformable holding fin (15) cooperating with said accessory (20), when inserted in said element (1).

22. Element (1) according to claim 1, **characterised in that** said holding part (154) presents, at the bottom, an inwardly recessed portion (157) for supporting the base of said accessory (20), when inserted in said element.

23. Element (1) according to claim 1, **characterised in that** it comprises screw joining means (7, 10) of said fixing part (3) to said frame (2).

24. Element (1) according to claim 23 and 17, **characterised in that** said screw joining means (7) of said holding part (4) to said fixing part (3) coincide with part of said screw attachment means (7, 10) of said fixing part (3) to said frame (2).

25. Element (1) according to claim 1, **characterised in that** it comprises clamp joining means of said fixing part (3) to said frame (2).

26. Element (1) according to claim 9, **characterised in that** in said first position, the axis (17) of said seat (5) defined by said annular part (4) is inclined with respect to the axis (8) of said fixing part (3), whereas in said second position, the axis (17) of said seat (5) defined by said annular part (5) substantially corresponds to the axis (8) of said fixing part (8).

27. Element (1) according to claim 9, **characterised in that** in said first position, the axis (17) of said seat (5) defined by said annular part (4) substantially corresponds to the axis (8) of said fixing part (3), whereas in said second position, the axis (17) of said seat (5) defined by said annular part (4) is inclined with respect to the axis (8) of said fixing part (3).

28. Element (1) according to claim 1, **characterised in that** it is a bottle holder.

29. Method for making a support element (1) suitable for being associated with a bicycle frame for supporting bicycle accessories (20), the support element comprising a fixing part (3) for the attachment to the frame (2) of the bicycle and at least one holding part (4; 154) defining a seat (5) suitable for receiving said accessory (20), **characterised in that** it comprises the steps of:
- making a substantially tubular element (50; 150; 250) of structural composite material comprising structural fibres of a length greater than a millimeter incorporated in a matrix of polymeric material, which tubular element (50; 150; 250) extends along a main direction (X) and has the outer surface shaped according to the profile of said parts (3, 4; 154);
- defining on said tubular element (50; 150; 250) a plurality of successive shapes corresponding to the shape of a first one between said fixing and holding parts (3, 4; 154);
- cutting said tubular element (50; 150; 250) according to the shapes of the one of said parts (3, 4; 154);
- assembling each of the cut parts (3, 4; 154) to the other of said fixing and holding parts (3, 4; 154), said other of said fixing and holding parts (3, 4; 154) comprising non-structural reinforcement elements incorporated in a polymeric material to form a reinforced plastic material.

30. Method according to claim 29, **characterised in that** said cutting operation is made through a pressurised water jet provided with abrasive particles.

31. Method according to claim 29, **characterised in that** said outer surface of said tubular element (50; 150) is shaped to obtain a plurality of holding parts (4; 154).

32. Method according to claim 31, **characterised in that** said outer surface of said tubular element (50) is shaped to obtain a plurality of holding parts (4) of said support element (1) according to a substantially annular configuration.

33. Method according to claim 29, **characterised in that** said outer surface of said tubular element (250) is shaped to obtain a plurality of fixing parts (3).

34. Method according to claim 29, **characterised in that** said making step of said tubular element (50; 150; 250) takes place by shaping in a mould (100).

35. Method according to claim 34, **characterised in that** said shaping step comprises the following stages:
- applying a predetermined number of layers (102) of structural fibres incorporated in a matrix of polymeric material onto the inner surface of a first part (101) of a mould (100);
- arranging an inflatable bag (103) on said layers (102);
- applying a second predetermined number of layers (105) of structural fibres incorporated in a matrix of plastic material onto the inner surface of a second part (101) of said mould (100) to define a zone where said bag (103) is received;
- moving the two parts (101, 104) of the mould (100) closer together;
- inflating the bag (103) to make said layers (102, 105) adhere to said inner surfaces of said two parts (101, 104) of the mould (100);
- increasing the temperature up to a value which allows the reticulation of the polymeric material of said matrix;
- moving the two parts (101, 104) of the mould (100) apart to remove said tubular element (50; 150; 250).

36. Method according to claim 35, **characterised in that** said shaping step comprises the following stages:
- applying a predetermined number of layers (202) of structural fibres incorporated in a matrix of polymeric material onto the outer surface of a thermo-expandable core (203);
- arranging said core (203) coated with fibres inside a tubular recess defined by said mould (100);
- increasing the temperature up to a value which allows the reticulation of the polymeric material of said matrix and at the same time the expansion of said core (203).

37. Method according to claim 36, **characterised in that** it comprises a further step of removing said core (203).

38. Method according to claim 34, **characterised in that** said shaping step is obtained through injection moulding.

## Patentansprüche

1. Halteelement (1) für Fahrradutensilien (20), das ein Befestigungsteil (3) für die Befestigung an dem Rahmen (2) des Fahrrads und mindestens ein Halteteil (4; 154), das einen Sitz (5) definiert, der zum Aufnehmen der Utensilie (20) geeignet ist, aufweist, wobei sich die Befestigungs- und die Halterungsteile (3), (4; 154) entfernt voneinander befinden und über eine Verbindungseinrichtung (6) verbunden sind, **dadurch gekennzeichnet, dass** mindestens eines der Teile (3, 4; 154) strukturelle Fasern einer Länge, die größer als ein Millimeter ist, die in einer Matrix eines Polymermaterials eingebettet sind, um ein Verbundbaumaterial zu bilden, aufweist, und mindestens eines der Teile (3, 4; 154) nicht-strukturelle Verstärkungselemente aufweist, die in das Polymermaterial eingesetzt sind, um ein verstärktes Kunststoffmaterial zu bilden.

2. Element (1) nach Anspruch 1, **dadurch gekennzeichnet, dass** die strukturellen Fasern aus der Gruppe ausgewählt sind, die Kohlefasern, Glasfasern, Aramidfasern, keramische Fasern, oder irgendeine Kombination davon, umfasst.

3. Element (1) nach Anspruch 1, **dadurch gekennzeichnet, dass** die nicht-strukturellen Verstärkungselemente aus Kohlefasern, Glasfasern, Glaskugeln, Mineralien, oder irgendeiner Kombination davon, ausgewählt sind.

4. Element (1) nach Anspruch 1, **dadurch gekennzeichnet, dass** das Polymermaterial von mindestens einem der Teile (3, 4; 154) ein thermisch härtendes Kunststoffmaterial ist.

5. Element (1) nach Anspruch 1, **dadurch gekennzeichnet, dass** das Polymermaterial mindestens eines der Teile (3, 4; 154) ein thermoplastisches Material ist.

6. Element (1) nach Anspruch 1, **dadurch gekennzeichnet, dass** das Halteteil (4; 154) aus dem Verbundbaumaterial gebildet ist und dass das Befestigungsteil (3) aus dem verstärkten Kunststoffmaterial gebildet ist.

7. Element (1) nach Anspruch 1, **dadurch gekennzeichnet, dass** das Halteteil (4) im Wesentlichen ringförmig geformt ist, um quer das Utensil (20) zu umschließen.

8. Element (1) nach Anspruch 1, **dadurch gekennzeichnet, dass** das Halteteil (154) im Wesentlichen eine Längserstreckung entlang einer Hauptrichtung eines Einsetzens des Utensils (20) zeigt.

9. Element (1) nach Anspruch 7, **dadurch gekennzeichnet, dass** es eine elastische Streckzone (9) aufweist, die dazu geeignet ist, die Oszillation des ringförmigen Halteteils (4) in Bezug auf das Befestigungsteil (3) von einer ersten zu einer zweiten Position durch das Einführen des Utensils (20) in den Sitz (5) so, dass das ringförmige Halteteil (4) das Utensil (20) hält, das in dem Sitz (5) verriegelt ist, zuzulassen.

10. Element (1) nach Anspruch 9, **dadurch gekennzeichnet, dass** die elastische Streckzone (9) nahe zu der Verbindungseinrichtung (6) liegt.

11. Element (1) nach Anspruch 10, **dadurch gekennzeichnet, dass** die elastische Streckzone in dem Halteteil gebildet ist.

12. Element (1) nach Anspruch 10, **dadurch gekennzeichnet, dass** die elastische Streckzone (9) in dem Befestigungsteil (3) gebildet ist.

13. Element (1) nach Anspruch 10, **dadurch gekennzeichnet, dass** das Halteteil (4) und/oder das Befestigungsteil (3) eine Durchgangsöffnung (11) haben, die die elastische Streckzone (9) bildet.

14. Element (1) nach Anspruch 10, **dadurch gekennzeichnet, dass** die elastische Streckzone (9) durch die Verwendung eines Materials mit elastischen Charakteristika gebildet ist.

15. Element (1) nach Anspruch 1, **dadurch gekennzeichnet, dass** es ein Abstandselement (12) aufweist, das zwischen dem Halteteil (4) und dem Rahmen (2) angeordnet ist.

16. Element (1) nach Anspruch 15, **dadurch gekennzeichnet, dass** das Abstandselement (12) in einem einteiligen Körper mit dem Befestigungsteil (3) gebildet ist.

17. Element (1) nach Anspruch 1, **dadurch gekennzeichnet, dass** die Verbindungseinrichtung (6) ein Schraubmittel (7) aufweist.

18. Element (1) nach Anspruch 1, **dadurch gekennzeichnet, dass** die Verbindungseinrichtung (6) Nieten aufweist.

19. Element (1) nach Anspruch 1, **dadurch gekennzeichnet, dass** die Verbindungseinrichtung (6) eine Klebesubstanz aufweist.

20. Element (1) nach Anspruch 1, **dadurch gekennzeichnet, dass** das Befestigungsteil (3) an dem Boden einen nach innen vertieften Bereich (14) zum Halten des Bodens des Utensils (20), wenn es in das Element (1) eingesetzt ist, zeigt.

21. Element (1) nach Anspruch 1, **dadurch gekennzeichnet, dass** das Befestigungsteil (3) an der Oberseite eine elastisch deformierbare Haltefinne (15) zeigt, die mit dem Utensil (20) zusammenwirkt, wenn es in das Element (1) eingesetzt ist.

22. Element (1) nach Anspruch 1, **dadurch gekennzeichnet, dass** das Halteteil (154) an dem Boden einen nach innen vertieften Bereich (157) zum Halten der Basis des Utensils (20), wenn es in das Element eingesetzt ist, zeigt.

23. Element (1) nach Anspruch 1, **dadurch gekennzeichnet, dass** es eine Schraubverbindungseinrichtung (7, 10) des Befestigungsteils (3) an dem Rahmen (2) aufweist.

24. Element (1) nach Anspruch 23 und 17, **dadurch gekennzeichnet, dass** die Schraubverbindungseinrichtung (7) des Halteteils (4) an dem Befestigungsteil (3) mit einem Teil der Schraubbefestigungseinrichtung (7, 10) des Befestigungsteils (3) an dem Rahmen (2) übereinstimmt.

25. Element (1) nach Anspruch 1, **dadurch gekennzeichnet, dass** es eine Klemmverbindungseinrichtung des Befestigungsteils (3) an dem Rahmen (2) aufweist.

26. Element (1) nach Anspruch 9, **dadurch gekennzeichnet, dass**, in der ersten Position, die Achse (17) des Sitzes (5), definiert durch das ringförmige Teil (4), in Bezug auf die Achse (8) des Befestigungsteils (3) geneigt ist, wogegen, in der zweiten Position, die Achse (17) des Sitzes (5), die durch das ringförmige Teil (5) definiert ist, im Wesentlichen der Achse (8) des Befestigungsteils (8) entspricht.

27. Element (1) nach Anspruch 9, **dadurch gekennzeichnet, dass**, in der ersten Position, die Achse (17) des Sitzes (5), definiert durch das ringförmige Teil (4), im Wesentlichen mit der Achse (8) des Befestigungsteils (3) übereinstimmt, wogegen, in der zweiten Position, die Achse (17) des Sitzes (5), definiert durch das ringförmige Teil (4), in Bezug auf die Achse (8) des Befestigungsteils (3) geneigt ist.

28. Element (1) nach Anspruch 1, **dadurch gekennzeichnet, dass** es ein Flaschenhalter ist.

29. Verfahren zum Herstellen eines Trageelements (1), das dazu geeignet ist, einem Fahrradrahmen zugeordnet zu werden, um Fahrradutensilien (20) zu halten, wobei das Halteelement ein Befestigungsteil (3) für die Befestigung an dem Rahmen (2) des Fahrrads und mindestens ein Halteteil (4; 154), das einen Sitz (5) definiert, der dazu geeignet ist, das Utensil (20) aufzunehmen, aufweist, **dadurch gekennzeichnet, dass** es die Schritte aufweist:
- Herstellen eines im Wesentlichen rohrförmigen Elements (50; 150; 250) aus einem Verbundbaumaterial, das strukturelle Fasern mit einer Länge größer als ein Millimeter, die in einer Matrix aus Polymermaterial eingebettet sind, aufweist, wobei sich das rohrförmige Element (50; 150; 250) entlang einer Hauptrichtung (X) erstreckt und die äußere Fläche entsprechend dem Profil der Teile (3, 4; 154) geformt besitzt;
- Definieren, auf dem rohrförmigen Element (50; 150; 250), einer Vielzahl von aufeinander folgenden Formen, entsprechend der Form einer ersten einen zwischen dem Befestigungs- und dem Halteteil (3, 4; 154);
- Abschneiden des rohrförmigen Elements (50; 150; 250) entsprechend den Formen des einen der Teile (3, 4; 154);
- Aneinanderbauen jedes der geschnittenen Teile (3, 4; 154) an dem anderen des Befestigungs- und des Halteteils (3, 4; 154), wobei das andere des Befestigungs- und des Halteteils (3, 4; 154) nicht-strukturelle Verstärkungselemente aufweist, die in einem Polymermaterial eingebettet sind, um ein verstärktes Kunststoffmaterial zu bilden.

30. Verfahren nach Anspruch 29, **dadurch gekennzeichnet, dass** der Schneidvorgang über einen Wasserstrahl, der mit abrasiven Teilchen versehen ist, vorgenommen wird.

31. Verfahren nach Anspruch 29, **dadurch gekennzeichnet, dass** die äußere Fläche des rohrförmigen Elements (50; 150) so geformt ist, um eine Vielzahl von Halteteilen (4; 154) zu erhalten.

32. Verfahren nach Anspruch 31, **dadurch gekennzeichnet, dass** die äußere Fläche des rohrförmigen Elements (50) so geformt ist, um eine Vielzahl von Halteteilen (4) des Trageelements (1) entsprechend einer im Wesentlichen ringförmigen Anordnung zu erhalten.

33. Verfahren nach Anspruch 29, **dadurch gekennzeichnet, dass** die äußere Fläche des rohrförmigen Elements (250) so geformt ist, um eine Vielzahl von Befestigungsteilen (3) zu erhalten.

34. Verfahren nach Anspruch 29, **dadurch gekennzeichnet, dass** der Herstellungsschritt des rohrförmigen Elements (50; 150; 250) durch Formen in einer Form (100) stattfindet.

35. Verfahren nach Anspruch 34, **dadurch gekennzeichnet, dass** der Formungsschritt die folgenden Stufen aufweist:
- Aufbringen einer vorbestimmten Anzahl von Schichten (102) der strukturellen Fasern, die in einer Matrix eines Polymermaterials eingebettet sind, auf die Innenfläche eines ersten Teils (101) einer Form (100);
- Anordnen eines aufblasbaren Beutels (103) auf den Schichten (102);
- Aufbringen einer zweiten, vorgegebenen Anzahl von Schichten (105) der strukturellen Fasern, die in einer Matrix aus Kunststoffmaterial eingebettet sind, auf die innere Fläche eines zweiten Teils (101) der Form (100), um eine Zone zu definieren, wo der Beutel (103) aufgenommen wird;
- Bewegen der zwei Teile (101, 104) der Form (100) näher zueinander;
- Aufblasen des Beutels (103), damit die Schichten (102, 105) an den inneren Flächen der zwei Teile (101, 104) der Form (100) ankleben;
- Erhöhen der Temperatur bis zu einem Wert, der die Vernetzung des Polymermaterials der Matrix ermöglicht;
- Bewegen der zwei Teile (101, 104) der Form (100) weg voneinander, um das rohrförmige Element (50; 150; 250) zu entfernen.

36. Verfahren nach Anspruch 35, **dadurch gekennzeichnet, dass** der Formungsschritt die folgenden Stufen aufweist:
- Aufbringen einer vorbestimmten Anzahl von Schichten (202) der strukturellen Fasern, die in einer Matrix aus Polymermaterial eingebettet sind, auf die äußere Fläche eines thermisch expandierbaren Kerns (203);
- Anordnen des Kerns (203), der mit den Fasern beschichtet ist, innerhalb einer rohrförmigen Vertiefung, die durch die Form (100) definiert ist;
- Erhöhen der Temperatur bis zu einem Wert, der die Vernetzung des Polymermaterials der Matrix und gleichzeitig die Expansion des Kerns (203) ermöglicht.

37. Verfahren nach Anspruch 36, **dadurch gekennzeichnet, dass** es weiterhin den Schritt eines Entfernens des Kerns (203) aufweist.

38. Verfahren nach Anspruch 34, **dadurch gekennzeichnet, dass** der Formungsschritt über Spritzgießen erhalten wird.

## Revendications

1. Élément de support (1) pour des accessoires (20) de vélo comprenant une pièce de fixation (3) destinée l'adaptation au cadre (2) du vélo et au moins une pièce de maintien (4; 154) définissant un logement (5) aporoprié pour recevoir ledit accessoire (20), dans lequel lesdites pièces de fixation (3) et de maintien (4; 154) sont distinctes l'une de l'autre et reliées par l'intermédiaire d'un moyen de jonction (6), **caractérisé en ce qu'**au moins l'une desdites pièces (3, 4 ; 154) comprend des fibres structurelles, d'une longueur supérieure à un millimètre, incorporées dans une matrice d'un matériau polymère afin de former un matériau composite structurel, et
au moins l'une desdites pièces (3, 4 ; 154) comprend des éléments de renforcement non structurels incorporés dans ledit matériau polymère afin de former une matière plastique renforcée.

2. Élément (1) selon la revendication 1, **caractérisé en ce que** lesdites fibres structurelles sont choisies parmi le groupe comprenant des fibres de carbone, des fibres de verre, des fibres d'aramide, des fibres de céramique ou une quelconque combinaison de celles-ci.

3. Élément (1) selon la revendication 1, **caractérisé en ce que** lesdits éléments de renforcement non structurels sont choisis parmi des fibres de carbone, des fibres de verre, des billes de verre, des minéraux ou une quelconque combinaison de ceux-ci.

4. Élément (1) selon la revendication 1, **caractérisé en ce que** le matériau polymère d'au moins l'une desdites pièces (3, 4 ; 154) est une matière plastique thermodurcissable.

5. Élément (1) selon la revendication 1, **caractérisé en ce que** le matériau polymère d'au moins l'une desdites pièces (3. 4 ; 154) est une matière thermoplastique.

6. Élément (1) selon la revendication 1, **caractérisé en ce que** ladite pièce de maintien (4 ; 154) est constituée dudit matériau composite structurel et **en ce que** ladite pièce de fixation (3) est constituée de ladite matière plastique renforcée.

7. Élément (1) selon la revendication 1, **caractérisé en ce que** ladite pièce de maintien (4) est de forme sensiblement annulaire afin d'encercler transversalement ledit accessoire (20).

8. Élément (1) selon la revendication 1, **caractérisé en ce que** ladite partie de maintien (154) présente une extension sensiblement longitudinale le long d'une direction principale d'insertion dudit accessoire (20).

9. Élément (1) selon la revendication 7, **caractérisé en ce qu'**il comprend une zone élastiquement molle (9) convenant pour permettre l'oscillation de ladite pièce de maintien annulaire (4) par rapport à ladite pièce de fixation (3) depuis une première jusqu'à une seconde position, au moyen de l'introduction dudit accessoire (20) dans ledit logement (5) de telle sorte que, dans ladite seconde position, ladite pièce de maintien annulaire (4) retienne verrouiller l'accessoire (20) dans ledit logement (5).

10. Élément (1) selon la revendication 9, **caractérisé en ce que** ladite zone élastiquement molle (9) se trouve à proximité dudit moyen de jonction (6).

11. Élément (1) selon la revendication 10, **caractérisé en ce que** ladite zone élastiquement molle est réalisée dans ladite pièce de maintien.

12. Élément (1) selon la revendication 10, **caractérisé en ce que** ladite zone élastiquement molle (9) est réalisée dans ladite pièce de fixation (3).

13. Élément (1) selon la revendication 10, **caractérisé en ce que** ladite pièce de maintien (4) et/ou ladite pièce de fixation (3) comporte une ouverture traversante (11) qui constitue ladite zone élastiquement molle (9).

14. Élément (1) selon la revendication 10, **caractérisé en ce que** ladite zone élastiquement molle (9) est réalisée grâce à l'utilisation d'un matériau présentant des caractéristiques élastiques.

15. Élément (1) selon la revendication 1, **caractérisé en ce qu'**il comprend un élément formant entretoise (12) placé entre ladite pièce de maintien (4) et ledit cadre (2),

16. Élément (1) selon la revendication 15, **caractérisé en ce que** ledit élément formant entretoise (12) est réalisé en un seul corps avec ladite pièce de fixation (3).

17. Élément (1) selon la revendication 1, **caractérisé en ce que** ledit moyen de jonction (6) comprend un moyen de vissage (7).

18. Élément (1) selon la revendication 1, **caractérisé en ce que** ledit moyen de jonction (6) comprend des rivets.

19. Élément (1) selon la revendication 1, **caractérisé en ce que** ledit moyen de jonction (6) comprend une substance de collage,

20. Élément (1) selon la revendication 1, **caractérisé en ce que** ladite place de fixation (3) présente, dans sa partie basse, une partie en retrait vers l'intérieur (14) destinée à supporter le fond dudit accessoire (20) lorsqu'il est inséré dans ledit élément (1).

21. Élément (1) selon la revendication 1, **caractérisé en ce que** ladite pièce de fixation (3) présente, dans sa partie haute, une bride de maintien élastiquement déformable (15) coopérant avec ledit accessoire (20) lorsqu'il est inséré dans ledit élément (1).

22. Élément (1) selon la revendication 1, **caractérisé en ce que** ladite pièce de maintien (154) présente, dans sa partie basse, une partie en retrait vers l'intérieur (157) destinée à supporter la base dudit accessoire (20) lorsqu'il est inséré dans ledit élément.

23. Élément (1) selon la revendication 1, **caractérisé en ce qu'**il comprend un moyen de jonction à vis (7, 10) de ladite pièce de fixation (3) sur ledite cadre (2).

24. Élément (1) selon la revendication 23 et 17, **caractérisé en ce que** ledit moyen de jonction à vis (7) de ladite pièce de maintien (4) sur ladite partie de fixation (3) coïncide avec une pièce dudit moyen de fixation à vis (7, 10) de ladite pièce de fixation (3) sur ledit cadre (2).

25. Élément (1) selon la revendication 1, **caractérisé en ce qu'**il comprend un moyen de jonction à pinces de ladite pièce de fixation (3) sur ledit cadre (2) .

26. Élément (1) selon la revendication 9, **caractérisé en ce que** dans ladite première position, l'axe (17) dudit logement (5) défini par ladite; pièce annulaire (4) est incliné par rapport à l'axe (8) de ladite pièce de fixation (3), alors que dans ladite seconde position, l'axe (17) dudit logement (5) défini par ladite pièce annulaire (5) correspond sensiblement à l'axe (8) de ladite pièce de fixation (8).

27. Élément (1) selon la revendication 9, **caractérisé en ce que** dans ladite première position, l'axe (17) dudit logement (5) défini par ladite pièce annulaire (4) correspond sensiblement à l'axe (8) de ladite pièce de fixation (3), alors que dans ladite seconde position, l'axe (17) dudit logement (5) défini par ladite pièce annulaire (4) est incliné par rapport à l'axe (8) de ladite pièce de fixation (3).

28. Élément (1) selon la revendication 1, **caractérisé en ce qu'**il s'agit d'un support de bouteille.

29. Procédé de réalisation d'un élément de support (1) approprié pour être associé à un cadre de vélo pour supporter des accessoires de vélo (20), l'élément de support comprenant une pièce de fixation (3) destinée à l'adaptation au cadre (2) du vélo et au moins une pièce de maintien (4 ; 154) définissant un logement (5) approprié pour recevoir ledit accessoire (20), **caractérisé en ce qu'**il comprend les étapes consistant à :
- réaliser un élément sensiblement tubulaire (50 : 150 ; 250) d'un matériau composite structurel comprenant des fibres structurelles d'une longueur supérieure à un millimètre, incorporées dans une matrice de matériau polymère, l'élément tubulaire (50 ; 150 ; 250) s'étendant le long d'une direction principale (X) et présentant une surface extérieure mise en forme en fonction du profil, desdites pièces (3, 4 ; 154),
- définir sur ledit élément tubulaire (50 ; 150; 250) une pluralité de formes successives correspondant à la forme d'une première pièce entre lesdites pièce de fixation et de maintien (3, 4 ; 154),
- découper ledit élément tubulaire (50 ; 150 ; 250) en fonction des formes de l'une desdites pièces (3, 4 ; 154),
- assembler chacune des pièces découpées (3, 4 ; 154), sur l'autre desdites pièces de fixation et de maintien (3, 4 ; 154), ladite autre desdites pièces de fixation et de maintien (3, 4 ; 154) comprenant des éléments de renforcement non structurels incorporés dans un matériau polymère afin de former une matière plastique renforcée.

30. Procédé selon la revendication 29, **caractérisé en ce que** ladite opération de découpe est réalisée par l'intermédiaire d'un jet d'eau pressurisée comportant des particules abrasives.

31. Procédé selon la revendication 29, **caractérisé en ce que** ladite surface extérieure dudit élément tubulaire (50 ; 150) est mise en forme pour obtenir une pluralité de pièces de maintien (4 ; 154).

32. Procédé selon la revendication 31, **caractérisé en ce que** ladite surface extérieure dudit élément tubulaire (50) est mise en forme pour obtenir une pluralité de pièces de maintien (4) dudit élément de support (1) en fonction d'une configuration sensiblement annulaire.

33. Procédé selon la revendication 20, **caractérisé en ce que** ladite surface extérieure dudit élément tubulaire (250) est mise en forme pour obtenir une pluralité de pièces de fixation (3).

34. Procédé selon la revendication 29, **caractérisé en ce que** ladite étape de réalisation dudit élément tubulaire (50; 150; 250) a lieu grâce à une mise en forme dans un moule (100).

35. Procédé selon la revendication 34, **caractérisé en ce que** ladite étape de mise en forme comprend les étapes suivantes :
- appliquer un nombre prédéterminé de couches (102) de fibres structurelles incorporées dans une matrice de matériau polymère sur la surface intérieure d'une première pièce (101) d'un moule (100),
- disposer un sachet gonflable (103) sur lesdites couches (102),
- appliquer un second nombre prédéterminé de couches (105) de fibres structurelles incorporées dans une matrice de matière plastique sur la surface intérieure d'une seconde pièce (101) dudit moule (100) afin de définir une zone où est reçu ledit sachet (103),
- rapprocher les deux pièces (101, 104) du moule (100) l'une de l'autre,
- gonfler le sachet (103) afin de faire adhérer lesdites couches (102,105) sur lesdites surfaces intérieures desdites deux pièces (101,104) du moule (100),
- augmenter la température jusqu'à une valeur qui permet la réticulation du matériau polymère de ladite matrice,
- espacer les deux pièces (101, 104) du moule (100) afin de retirer ledit élément tubulaire (50 ; 150 ; 250).

36. Procédé selon la revendication 35, **caractérisé en ce que** ladite étape de mise en forme comprend les étapes suivantes:
- appliquer un nombre prédéterminé de couches (202) de fibres structure les incorporées dans une matrice de matériau polymère sur la surface extérieure d'un noyau thermodilatable (203),
- disposer ledit noyau (203) revêtu de fibres à l'intérieur d'un évidement tubulaire défini par ledit moule (100),
- augmenter la température jusqu'à une valeur qui permet la réticulation du matériau polymère de ladite matrice et, au même moment, la dilatation dudit noyau (203).

37. Procédé selon la revendication 36, **caractérisé en ce qu'**il comprend d'une étape supplémentaire consistant à retirer ledit noyau (203).

38. Procédé selon la revendication 34, **caractérisé en ce que** ladite étape de mise en forme est obtenue par l'intermédiaire d'un moulage par injection.
